# EUROPEAN PATENT APPLICATION

(11) **EP 0 756 108 A2**
(43) Date of publication of application: **29.01.1997**
(21) Application number: 96304908.5
(22) Date of filing: 03.07.1996
(51) Int. Cl.: F16H 7/08

(54) **Hydraulic chain tensioner for automotive engine**

(30) Priority: 24.07.1995 US 505935
(71) Applicant: FORD MOTOR COMPANY LIMITED, Brentwood Essex (GB); FORD FRANCE S. A., 92506 Rueil-Malmaison Cédex (FR); FORD-WERKE AKTIENGESELLSCHAFT, 50735 Köln (DE)
(72) Inventor: Cantrell, Douglas, Jr., Ann Arbor, Michigan 48103 (US)
(74) Representative: Messulam, Alec Moses

(57) **Abstract**

A chain tensioner and oil pressure regulator for an automotive engine includes a housing (24) having a supply port (26) in fluid communication with an engine oil supply passage (28), a piston (30) mounted within and extending from a cylindrical bore (38) formed in the housing (24), a tensioner oil supply passage (40) extending within the housing (24) from the supply port (26) to the cylindrical bore (38), and a pressure relief valve (34) mounted in the tensioner oil supply passage (40) for limiting the pressure within the engine oil supply passage.

## Description

The present invention relates to a chain tensioner which will simultaneously tension an engine chain, such as a camshaft drive chain, while providing control of the oil pressure within an engine oil passage supplying oil to the hydraulic chain tensioner.

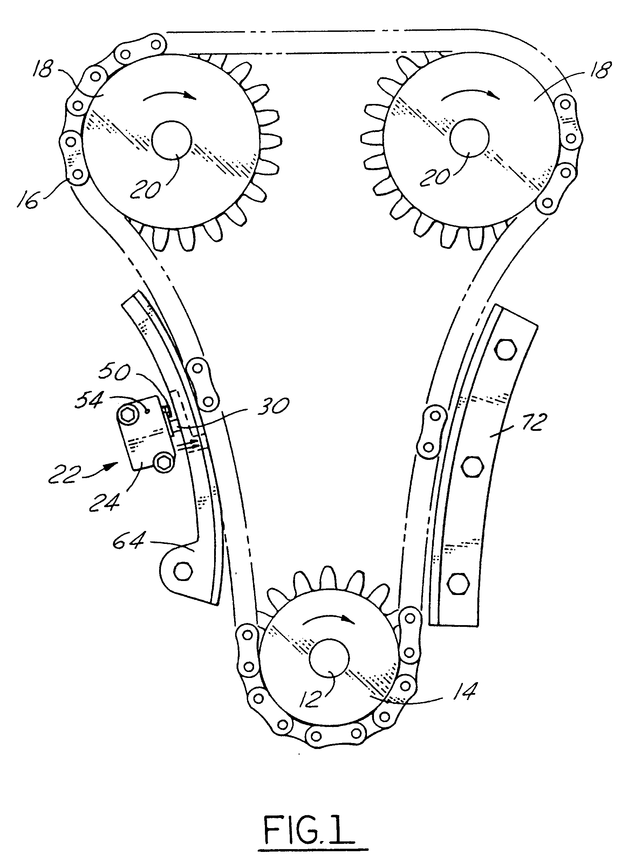

Although hydraulic chain tensioners have been used for many years in automotive engines, problems have stemmed from the use of such tensioners. Hydraulic chain tensioners have been known to cause dynamic pressure fluctuations in oil passages connected with the oil supply for the tensioner, due to dynamic load inputs from the chain drive system into the chain tensioner assembly. For example, with certain overhead camshaft engines having an arrangement generally shown in Figure 1, unwanted whipping motion or other resonance conditions of the camshaft drive chain has caused oil pressure within the engine oil passage, or galley, which feeds the hydraulic tensioner to rise uncontrollably, and at a very high rate. As a result, engine oil pressure in connected passages which feed hydraulic valve lash adjusters has risen concomitantly. This is undesirable because a high frequency spike in oil pressure within the passages feeding hydraulic lash adjusters may cause the lash adjusters to overextend temporarily, with the further result that a misfire may be caused because cylinder pressure is insufficient with one or more valves partially unseated. This in turn may cause a problem with onboard diagnostic monitoring for misfires. If a misfire occurs, the operator of the vehicle may be directed to return the vehicle to a dealership for repair, which in turn creates a difficult situation in the event that the misfiring condition cannot be duplicated. Alternatively, during cold-start conditions in which engine oil is in a highly viscous state, oil pressure within the engine's oil passages may reach excessive levels, which could cause the lash adjusters to overextend temporarily. As described above, the result may be an unwanted misfire condition.

A device according to the present invention provides hydraulic tensioning of a drive chain while preventing excessive pressure from building within the engine oil supply passage to which the tensioner is connected. As a result, the previously described problem with excessive oil pressure will be eliminated, as will unneeded warranty expense.

According to the present invention, there is provided a chain tensioner and oil pressure regulator for an automotive engine, comprising:
a housing having a supply port in fluid communication with an engine oil supply passage;
a piston mounted within and extending from a cylindrical bore formed in said housing;
a tensioner oil supply passage extending within the housing from said supply port to said cylindrical bore; and
a pressure relief valve mounted in said tensioner oil supply passage for limiting the pressure within the engine oil supply passage.

A chain tensioner embodying the present invention preferably further comprises an oil discharge port for furnishing oil which is passed through the pressure relief valve to a drive chain. A fixed orifice port supplies oil which is passed through the tensioner to the drive chain without passing through the pressure relief valve.

The present invention is advantageous because a combination oil pressure regulator and chain tensioner embodying this invention maintains proper chain tension, while providing additional lubrication at higher engine speeds, when the engine is operating in a regime which could cause misfire due to overextended hydraulic valve lash adjusters.

The invention will now be described, by way of example, with reference to the accompanying drawings, in which:
Figure 1 is a schematic representation of an automotive engine camshaft drive system having a combination tensioner and oil pressure regulator according to the present invention;
Figure 2 is a sectional view of the tensioner shown in Figure 1;
Figure 3 is an elevational view, partially broken away, of the tensioner of Figure 2, taken along the line 3-3 of Figure 2; and
Figure 4 illustrates a pivoting chain arm used in a system according to the present invention.

As shown in Figure 1, engine crankshaft 12 having crank sprocket 14, powers camshaft drive chain 16, which in turn operates camshafts 20 via driven sprockets 18. Tensioner 22, which pushes against pivoting chain arm 64, maintains a desired level of tension on chain 16. Fixed guide 72 aligns chain 16 on the side opposing tensioner 22. Chain arm 64 is maintained in contact with chain 16 by a hydraulically extendible piston and a ratchet bar extending from tensioner 22. As described more fully below, engine oil is allowed to pass through tensioner 22 through two separate flow paths and to impinge upon chain 16, so as to provide lubrication and cooling to chain 16.

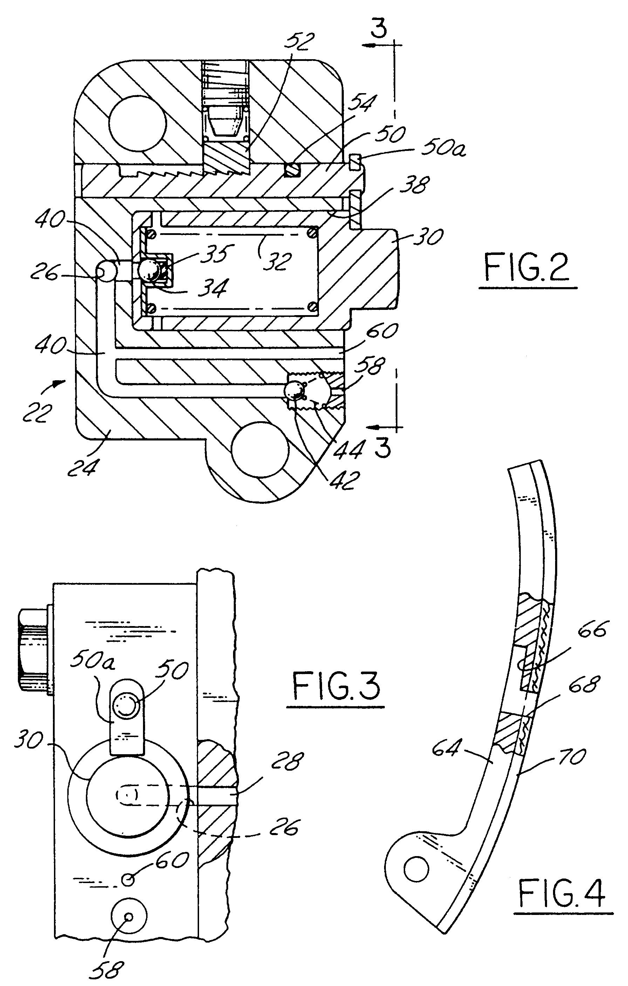

Further details of the present tensioner and oil pressure regulator are shown in Figures 2-4. Beginning with Figure 2, tensioner and oil pressure regulator housing 24 has supply port 26 for establishing fluid communication with an engine oil supply passage 28 (Figure 3). Those skilled in the art will appreciate in view of this disclosure that engine oil supply passage 28 could comprise a passage formed either in the cylinder block or the cylinder head of an engine or any other type of oil galley for furnishing pressurised lubricating oil to the present combination tensioner and oil pressure regulating device, as well as to other devices, such as hydraulic valve lash adjusters, or yet other devices which will benefit from control of the oil supply pressure. Oil entering supply port 26 moves into tensioner oil supply passage 40, which extends within housing 24 from supply port 26 to cylindrical bore 38. Before passing into bore 38, oil must first pass from tensioner oil supply passage 40 past check ball 34, which is urged to its closed position by spring 35. The purpose of check ball 34 is to prevent oil from backflowing from cylinder 38 into tensioner oil supply passage 40.

Oil pressure within cylinder 38 and spring 32 assist in urging tensioner piston 30 to extend from housing 24 and into contact with pivoting chain arm 64.. Thus, the force tending to extend piston 30 from housing 24 is the sum of the force exerted by spring 32, and the force of engine oil pressure applied to piston 30. It is this engine oil pressure which is limited by the device according to the present invention.

Not only piston 30, but also ratchet bar 50 extend from housing 24. Ratchet bar 50 has head 50a which, along with piston 30, engages pivoting chain arm 64., which is shown in greater detail in Figure 4. Relieved section 66 allows piston 30 to positively engage pivoting chain arm 64. Lining 70 allows chain 16 to slide over chain arm 64 with minimal friction.

The purpose of ratchet bar 50 is to prevent chain 16 from having too much slack during start-up of an engine having a system according to the present invention. To this end, index piston 52 is engageable with a series of teeth 56 formed in ratchet bar 50 so as to prevent ratchet bar 50 from moving from a more extended position to a less extended position, while allowing some play in the system to accommodate thermal expansion and contracting. Ratchet bar 50 is maintained in its retracted position by means of retention pin 54 (Figure 2) prior to installation of a tensioner according to the present invention in an engine. Although ratchet bar 50 extends with piston 30, ratchet bar 50, unlike, piston 30, cannot retract. Accordingly, when an engine equipped with the present device is starting, ratchet bar 50 will maintain the tension of chain 16 at a level sufficient to prevent both undue noise and disengagement of chain 16 from any of the various sprockets. The general configuration of ratchet bar 60 and piston 30 has been used by Ford Motor Company for several years in hydraulic chain tensioners.

Tensioner oil supply passage 40 extends not only between supply port 26 and cylindrical bore 38, but also between supply port 26 and pressure relief check ball 42 and fixed orifice port 60. Fixed orifice port 60 is directly in fluid communication with tensioner oil passage 40 and supply port 26, with the result that oil is furnished from fixed orifice port 60 to chain 16 whenever the engine is operating. Fixed orifice port 60 is sufficiently small in diameter such that the pressure within oil passage 40 will not be affected significantly. Accordingly, if the engine is operated at high speeds, or even at moderate speeds when the engine oil is cold, and therefore in a more viscous state, the oil pressure within engine oil supply passage 28 may reach an undesirably high level. In this case, pressure relief check ball 42 will be lifted from seat 42a against the force of pressure relief spring 44. When check ball 42 is lifted from its seat, oil will be discharged from relief valve discharge port 58. Oil passing through relief discharge port 58 will combine with oil from fixed orifice port 60 to provide lubrication and cooling for drive chain 16, while simultaneously limiting the pressure within engine oil passage 28. As suggested by Figure 4, oil flowing from tensioner and oil pressure regulator 22 will pass through oil squirt port 68 and then impinge upon chain 16.

Pressure relief check ball 42 may be lifted from its seat in the further event that movement of chain 16 at a high rate of speed against pivoting arm 64 causes piston 30 to move toward a more retracted position at a correspondingly high rate of speed. Because a limited amount of movement is allowed by ratchet bar 50, the force exerted on piston 30 by pivoting arm 64 and chain 16 may cause a high pressure spike within cylinder 38, which can leak past ball 34, causing a high pressure spike within oil passage 40. As previously described, this pressure spike results in movement of relief check ball 42, so as to clip the pressure spike.

Those skilled in the art will appreciate in view of this disclosure that the present chain tensioner and oil pressure regulator for a camshaft drive chain of an automotive engine may be viewed as a means for providing a fixed orifice port in fluid communication with an engine oil passage as well as a pressure operated port for furnishing oil from the engine oil system to the drive chain only when the oil pressure within the engine oil supply passage exceeds a threshold value. Of course, as described above, the pressure operated port is supplied with oil by the previously described pressure relief valve mounted within the chain tensioner and oil pressure regulator housing and interposed between the pressure operated port and the tensioner oil supply passage.

## Claims

1. A chain tensioner and oil pressure regulator for an automotive engine, comprising:
a housing (24) having a supply port (26) in fluid communication with an engine oil supply passage (28);
a piston (30) mounted within and extending from a cylindrical bore (38) formed in said housing (24);
a tensioner oil supply passage (40) extending within the housing (24) from said supply port (26) to said cylindrical bore (38); and
a pressure relief valve (34) mounted in said tensioner oil supply passage (40) for limiting the pressure within the engine oil supply passage (40).

2. A chain tensioner according to Claim 1, further comprising an oil discharge port for furnishing oil which has passed through the pressure relief valve to a drive chain.

3. A chain tensioner according to Claim 1 or 2, further comprising a fixed orifice port for applying oil which has passed through the tensioner to a drive chain, with said fixed orifice port being in fluid communication with said tensioner oil supply passage.

4. A chain tensioner according to any one of Claims 1 to 3, further comprising means for maintaining tension on a drive chain when engine oil pressure is below a minimum value required for the piston to tension the chain.

5. A chain tensioner and oil pressure regulator for an automotive engine, comprising:
a housing having a supply port in fluid communication with an engine oil supply passage;
a piston mounted within and extending from a cylindrical bore formed in said housing;
a tensioner oil supply passage extending from said supply port to said cylindrical bore; and
a pressure relief valve mounted in said tensioner oil supply passage for limiting the pressure within both the tensioner oil supply passage and the engine oil supply passage, with said pressure relief valve having an oil discharge port for applying oil which has passed through the tensioner during operation in which the pressure of the oil supplied to the tensioner exceeds a predetermined value to a chain which is being tensioned by the tensioner.

6. A chain tensioner according to Claim 5, further comprising a fixed orifice port for furnishing oil to a drive chain whenever the engine is operating, with said fixed orifice port being in fluid communication with said tensioner oil supply passage.

7. A chain tensioner and oil pressure regulator for a camshaft drive chain an automotive engine, comprising:
a housing having a supply port in fluid communication with an engine oil supply passage;
a piston mounted within and extending from a cylindrical bore formed in said housing, with said piston being operatively engaged with a pivoting chain arm;
a tensioner oil supply passage extending within said housing from said supply port to said cylindrical bore;
a fixed orifice port, in fluid communication with the tensioner oil supply passage, for furnishing oil from said tensioner oil supply passage to a drive chain whenever the engine is operating; and
a pressure operated port for furnishing oil from the tensioner oil passage to the drive chain only when the oil pressure within the engine oil supply passage exceeds a threshold value.

8. A chain tensioner and oil pressure regulator according to Claim 7, wherein said pressure operated port is supplied with oil by a pressure relief valve mounted within the housing and interposed between the pressure operated port and the tensioner oil supply passage.
